# EUROPEAN PATENT APPLICATION

(11) **EP 4 794 089 A1**
(43) Date of publication of application: **19.08.2026**
(21) Application number: 24877044.8
(22) Date of filing: 30.09.2024
(51) Int. Cl.: H01M 50/291, H01M 50/213, H01M 50/271, H01M 50/293

(54) **BATTERY PACK**

(30) Priority: 11.10.2023 JP 2023175961
(71) Applicant: Panasonic Intellectual Property Management Co., Ltd., Kadoma-shi, Osaka 571-0057 (JP)
(72) Inventor: TAWA, Yutaro, Kadoma-shi, Osaka 571-0057 (JP)
(74) Representative: Eisenführ Speiser
(86) International application number: PCT/JP2024/034867
(87) International publication number: WO 2025/079445

(57) **Abstract**

A battery pack (100) includes an elastic body (20) on a portion of each of the inner surfaces (12a) of a pair of lid parts (12). The pair of lid parts (12) are secured to the respective end surfaces of a battery block (2) housed in the housing space of a casing body (11). A gap (GP) is formed between each of the pair of lid parts (12) and an edge (11a) of a corresponding open end of the casing body (11). The lid part (12) includes: a lid body (13) that is a flat board; and a wall part (14) projecting from the inner surface of the lid body (13). The elastic body (20) is disposed to abut a surface of the wall part (14) that faces the inner surface of the casing body (44). The elastic body (20) includes an inclined surface (21) flaring out toward the inner surface of the lid part (12). A portion of the inclined surface (21) enters the gap (GP). A corner portion (19) of the casing body (11) that is located between an edge (11a) of the open end of the casing body (11) and the inner surface (11b) of the casing body (44) abuts the inclined surface (21).

## Description

### Technical Field

The present disclosure relates to battery packs.

### Background Art

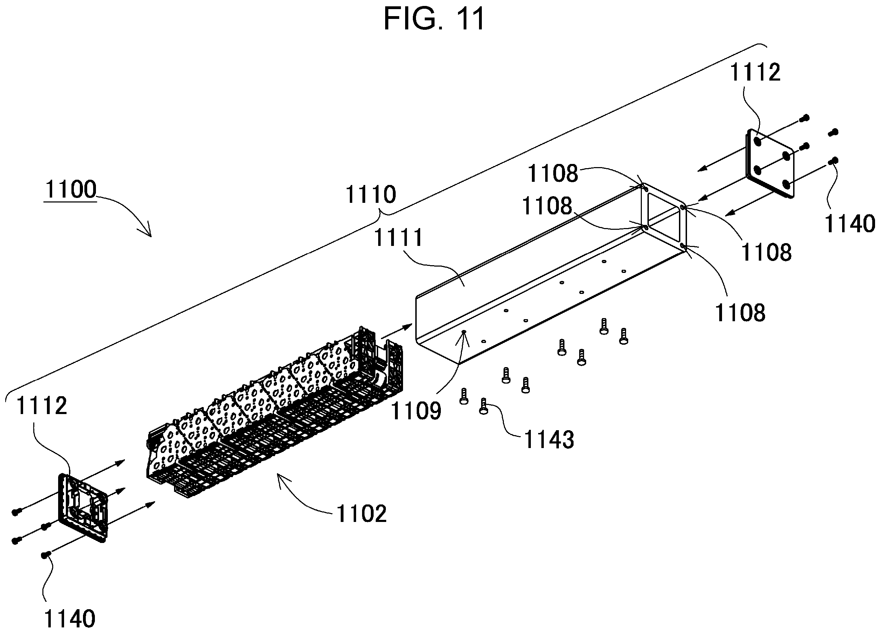

In currently available battery packs, a plurality of rechargeable secondary battery cells such ash lithium-ion secondary batteries connected in series or parallel are housed within an outer casing to drive a target device (for example, Patent Literature (PTL) 1). These battery packs use, for example, outer casing 1110 illustrated in the exploded perspective view of Fig. 11. The outer casing illustrated in this figure includes: tubular casing body 1111 having opposite open end surfaces such that the interior of casing body 1111 serves as a housing space; and a pair of lid parts 1112 that close the respective end surfaces. Furthermore, battery block 1102 holding a plurality of secondary battery cells is inserted into the housing space of casing body 1111. With battery block 1102 inserted through the end surface of casing body 1111, the respective end surfaces are closed by lid parts 1112. Using end surface screws 1140, lid parts 1112 are threaded into end surface screw holes 1108 which are open in the end surfaces of the casing body 1111.

Meanwhile, there are cases where the bottom surface of the casing body has bottom surface screw holes for securing the battery block inside the housing space. When inserted into the housing space of casing body 1111, battery block 1102 is threaded onto casing body 1111 via bottom surface screws 1143 fastened into bottom surface screw holes 1109 of casing body 1111. In battery pack 1100 having this structure, battery block 1102 inside casing body 1111 is directly threaded onto casing body 1111 and thus, battery block 1102 can be stably secured to outer casing 1110.

However, this configuration may not be applicable depending on the specifications of battery packs. For example, forming the end surface screw holes in the casing body requires an increased thickness of the casing body. When the casing body is made of metal in order to increase strength thereof, the increased thickness results in greater weight and cost. Furthermore, while the bottom surface or the like of the casing body needs to have the bottom surface screw holes so that the bottom surface or the like of the battery block is threaded onto the casing body, this configuration makes it difficult to achieve a watertight seal for the outer casing. For this reason, there are cases where the casing body and the battery block cannot be directly threaded onto each other. Therefore, in a conceivable configuration, the casing body has no end surface screw holes or bottom surface screw holes and the lid parts are directly secured to the battery block.

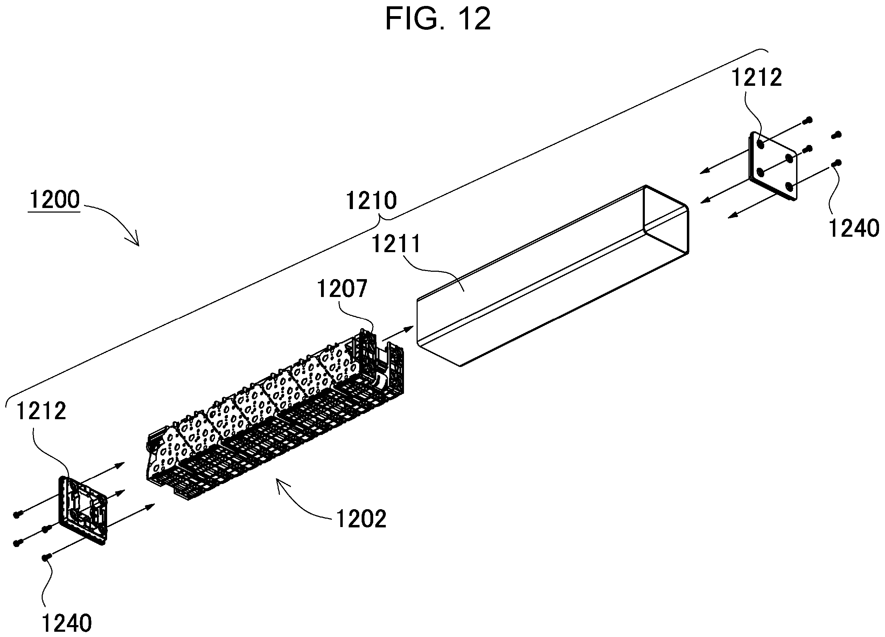

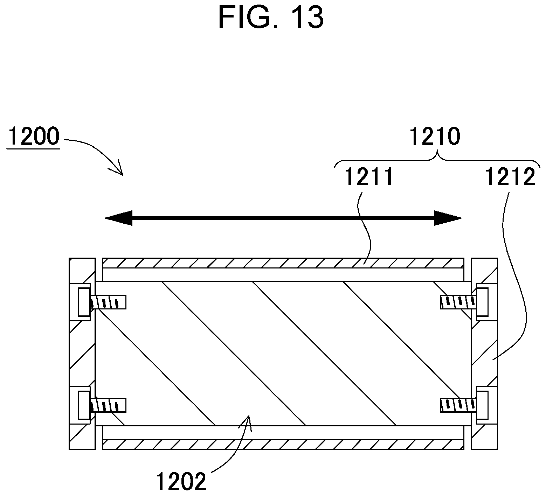

As an example, assume a configuration in which each of the end surfaces of battery block 1202 inserted into casing body 1211 of outer casing 1210 has block screw holes 1207 and lid part 1212 is threaded onto the end surface via end surface screws 1240, as illustrated in the exploded perspective view of Fig. 12. In this configuration, each of the end surfaces of casing body 1211 and lid part 1212 are not directly secured. Furthermore, a gap is formed at the joint interface between casing body 1211 and lid part 1212 due to manufacturing tolerances of casing body 1211, battery block 1202, and the like, as illustrated in the cross-sectional view of Fig. 13.

As a result, casing body 1211 undergoes a positional shift by a distance corresponding to the gap between casing body 1211 and lid part 1212, as indicated by the arrow in Fig. 13, which may obstruct alignment and compromise mountability of the battery pack to be installed in place on the target device.

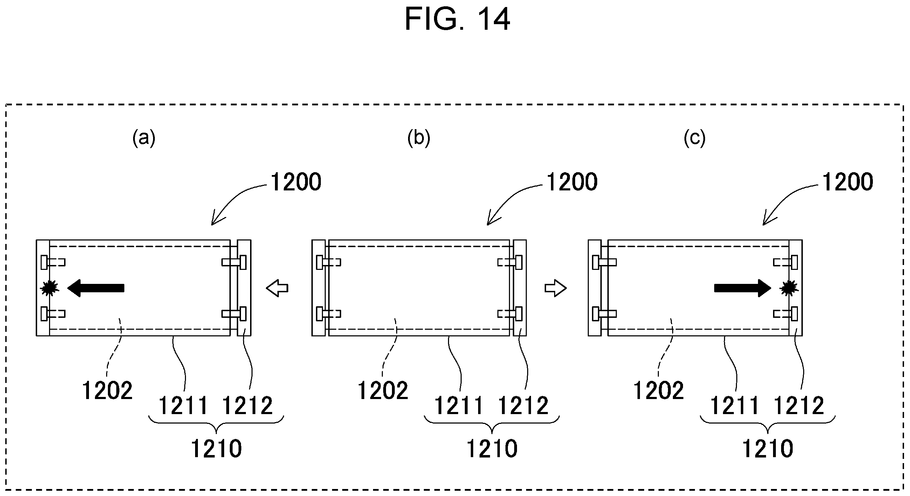

Furthermore, casing body 1211 moves by a distance corresponding to the gap between casing body 1211 and lid part 1212, as illustrated in Fig. 14. Therefore, when external stress is applied to the battery pack such as cases where the battery pack is used in an environment subject to vibration or the battery pack is dropped from a height, the battery pack may be damaged due to contact at the joint interface between casing body 1211 and lid part 1212. Depending on the application, specifications, and the like, the battery pack is required, for example, to pass drop and vibration tests as reliability and durability tests. In particular, when the casing body is made of metal in order to enhance the rigidity of the outer casing and the lid part is made of resin in order to improve insulation for connectors and the like disposed on the lid part, a stiffness mismatch between the metal casing body and the resin lid part may cause cracks or damage in the lid part.

### Citation List

### Patent Literature

PTL 1: Japanese Patent No. 6049288

### Summary of Invention

An object of the present disclosure is to provide a battery pack in which a battery block can be stably secured to an outer casing and a lid part. Furthermore, another object of the present disclosure is to provide a battery pack that absorbs component tolerances and has enhanced reliability to handle external forces. Note that the description of these aims and objects of the present disclosure does not preclude the existence of other aims and objects. An embodiment of the present disclosure does not need to achieve all of these objects. Furthermore, other objects can be extracted from the specification, the drawings, and the claims of the present disclosure.

A battery pack according to an aspect of the present disclosure includes: a battery block holding a plurality of secondary battery cells; an outer casing including (i) a casing body including a first end surface and a second end surface that are open, a first open end, a second open end, and a housing space, (ii) a first lid part configured to cover the first open end of the casing body; and (iii) a second lid part configured to cover the second open end of the casing body; and a first elastic body disposed on an inner surface of the first lid part. The battery block is housed in the housing space of the casing body. The first lid part is secured to the first end surface of the battery block. The second lid part is secured to the second end surface of the battery block. A first gap is formed between the first lid part and the casing body. The first lid part includes: a first lid body that is a flat board; and a first wall part projecting from an inner surface of the first lid body. The first elastic body is disposed to abut a surface of the first wall part that faces an inner surface of the casing body. The first elastic body includes a first inclined surface flaring out toward the inner surface of the first lid part. A portion of the first inclined surface enters the first gap. A first corner portion of the casing body that is located between an edge of the first open end of the casing body and the inner surface of the casing body abuts the first inclined surface.

In the battery pack according to an aspect of the present disclosure, the situation in which the main casing wobbles at opposite ends facing the lid parts due to the gaps formed between the casing body and the lid parts can be avoided by bringing the corner portion of the edge of the casing body into abutment with the elastic body while the battery block and the lid parts are secured.

### Brief Description of Drawings

[Fig. 1] Fig. 1 is a perspective view of a battery pack according to Embodiment 1.
[Fig. 2] Fig. 2 is an exploded perspective view of the battery pack of Fig. 1.
[Fig. 3] Fig. 3 is a cross-sectional view taken along line III-III of Fig. 1.
[Fig. 4] Fig. 4 is an enlarged cross-sectional view of a main part that illustrates the dashed line portion of Fig. 3.
[Fig. 5] Fig. 5 is an enlarged exploded perspective view of the lid part and the elastic body of Fig. 2.
[Fig. 6] Fig. 6 is an exploded perspective view of the lid part and the elastic body of Fig. 5 as viewed from the rear.
[Fig. 7] Fig. 7 is a perspective view of the lid part of Fig. 6 with the elastic body coupled thereto.
[Fig. 8] Fig. 8 is an exploded perspective view of a battery block.
[Fig. 9] Fig. 9 is a schematic cross-sectional view of the battery pack with the elastic body removed.
[Fig. 10] Fig. 10 is a schematic cross-sectional view of the battery pack of Fig. 9 with the elastic body added thereto.
[Fig. 11] Fig. 11 is an exploded perspective view of a battery pack according to Comparative Example 1.
[Fig. 12] Fig. 12 is an exploded perspective view of a battery pack according to Comparative Example 2.
[Fig. 13] Fig. 13 is a schematic cross-sectional view of the battery pack of Fig. 12.
[Fig. 14] Fig. 14 is a schematic cross-sectional view illustrating the battery pack of Fig. 13 in (a), the battery pack with the casing body having moved to the left in (b), and the battery pack with the casing body having moved to the right in (c).
[Fig. 15] Fig. 15 is an enlarged cross-sectional view of Fig. 4.
[Fig. 16] Fig. 16 is an enlarged cross-sectional view illustrating an example where a gap is not appropriate in Fig. 4.
[Fig. 17] Fig. 17 is an enlarged cross-sectional view illustrating an example where a gap is maximum in Fig. 4.

### Description of Embodiments

An embodiment of the present disclosure may be specified by configurations, features, and the like indicated below.

A battery pack according to another aspect of the present disclosure is the battery pack according to the above aspect in which the first elastic body extends so that the first inclined surface flares out in a region where the first lid part and the edge of the first open end of the casing body overlap as viewed from the lid part. This configuration brings the corner portion of the casing body into contact with the inclined surface, making it possible to prevent the casing body from wobbling.

Furthermore, a battery pack according to another aspect of the present disclosure is the battery pack according to any one of the above aspects in which the first elastic body includes a flange portion projecting toward the inner surface of the casing body. This configuration can lead to a watertight structure in which the battery pack is sealed at the flange portion in a liquid-tight manner. Furthermore, because wobbling of the casing body can be prevented using the elastic body, which realizes the watertight structure, a wobble-free structure can be realized using existing members without requiring additional members.

Moreover, a battery pack according to another aspect of the present disclosure is the battery pack according to any one of the above aspects in which the first lid body includes a recessed portion between the first wall part and a peripheral edge of the first lid body, and the first elastic body includes a projecting portion inserted into the recessed portion of the first lid body. This configuration allows the lid part and the elastic body to be positioned and joined by inserting the projecting portion into the recessed portion. In particular, when the recessed portion and the projecting portion are disposed in a direction in which the lid part is secured to the battery block, the lid body can push the elastic body in the securing direction to achieve stable mounting.

In addition, a battery pack according to another aspect of the present disclosure is the battery pack according to any one of the above aspects in which the first elastic body is integrally formed with the first wall part by double molding. With this configuration, the elastic body can be easily secured to the lid part.

In addition, a battery pack according to another aspect of the present disclosure is the battery pack according to any one of the above aspects in which the first corner portion at the first open end of the casing body is chamfered. This configuration ensures that the corner portion, which contacts the elastic body, forms an obtuse angle, increasing the contact area and thereby allowing the casing body to be more stably prevented from wobbling.

In addition, a battery pack according to another aspect of the present disclosure is the battery pack according to any one of the above aspects in which the pair of lid parts are threadably secured to the respective end surfaces of the battery block. With this configuration, the lid part and the battery block can be easily secured.

Hereinafter, an exemplary embodiment of the present disclosure will be described with reference to the drawings. Note that the exemplary embodiment described below is mere illustrations for embodying the technical idea of the present disclosure; the present disclosure is not limited to that described below. The present specification should not be considered limiting in any way the members recited in the claims to the members indicated in the exemplary embodiment. In particular, the dimensions, materials, shapes, relative positioning, etc., of components indicated in the exemplary embodiment are not intended to limit the scope of the present disclosure thereto, but are merely exemplary, unless otherwise specifically noted. Note that there are cases where the size, positional relationship, etc., of the members illustrated in the drawings are exaggerated for clarity of explanation. Furthermore, in the following description, the same name and reference signs indicate the same or similar members, and detailed description thereof will be omitted, as appropriate. Moreover, the elements included in the present disclosure may be realized by forming two or more elements out of the same member so that one member functions as two or more elements or by allocating the functions of one member to two or more members.

The battery pack according to the present disclosure can be used as a power supply for driving movable bodies such as an electric assisted bicycle, an electric cart, and an electric scooter, a power supply for radios, a power supply for portable electrical devices such as an electric cleaner and an electric tool, a backup power supply of a server for stationary energy storage usage, or a power supply device for homes, offices, and factories, and can also be used as a power supply for driving vehicles such as a hybrid vehicle and an electric vehicle, for example. Hereinafter, a battery pack to be used as a power supply for driving an electric assisted bicycle will be described as one embodiment of the present invention.

### [Embodiment 1]

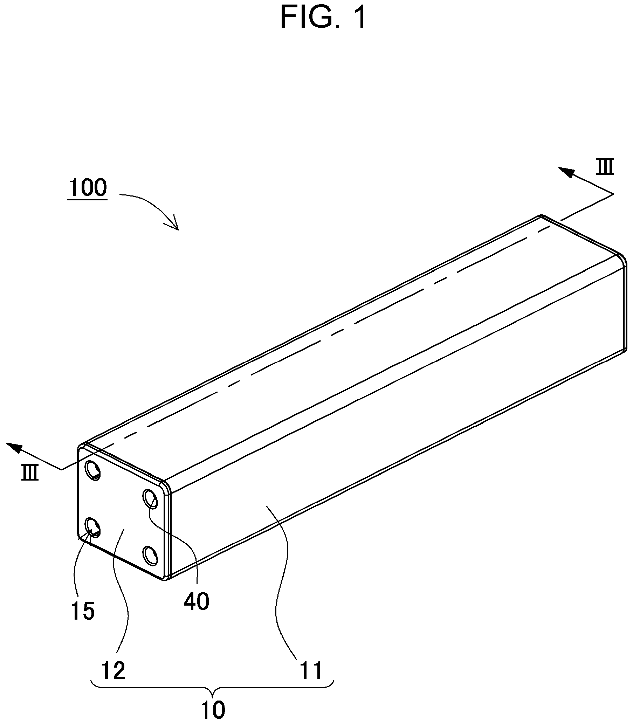

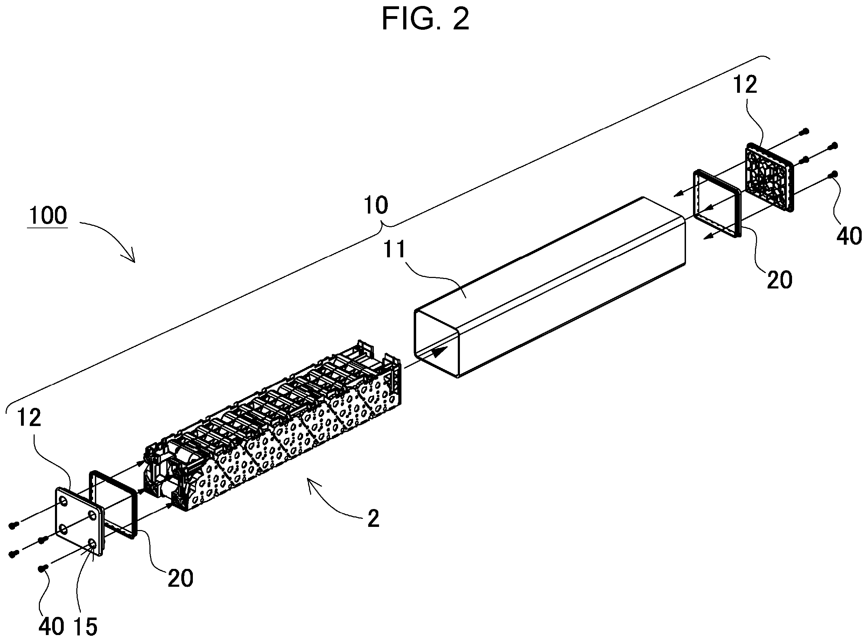

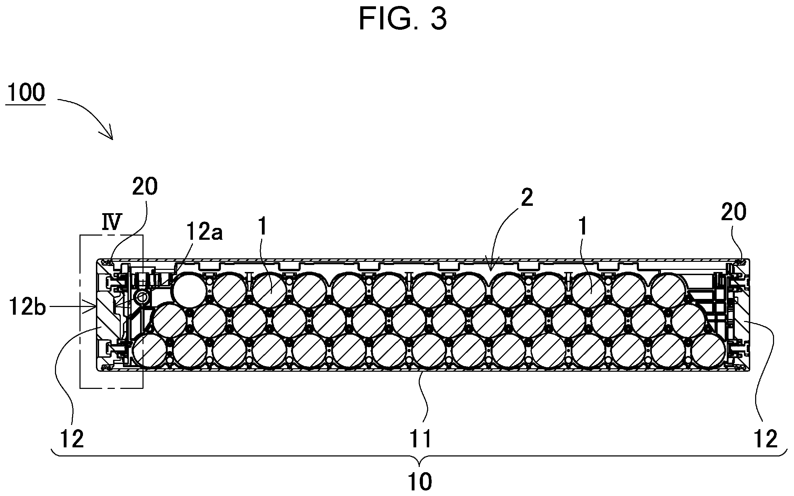

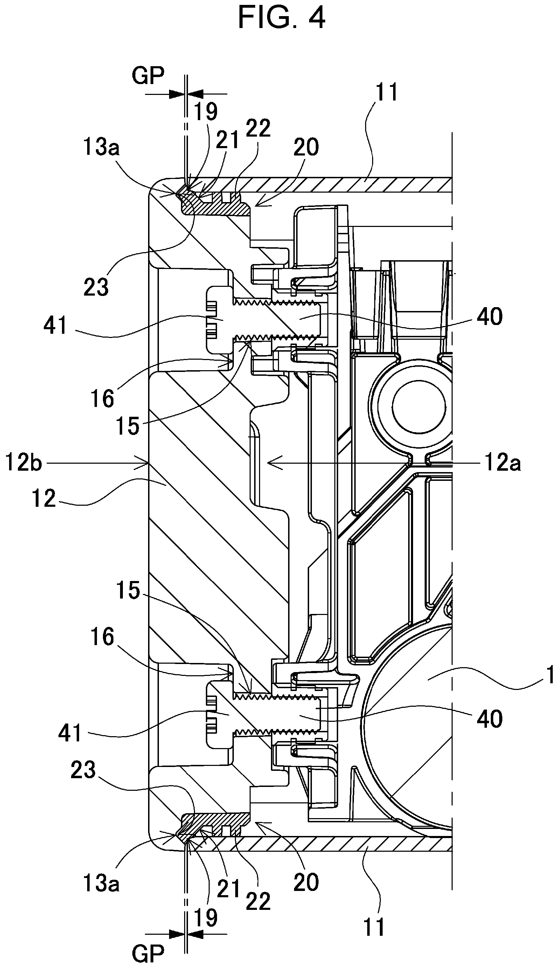

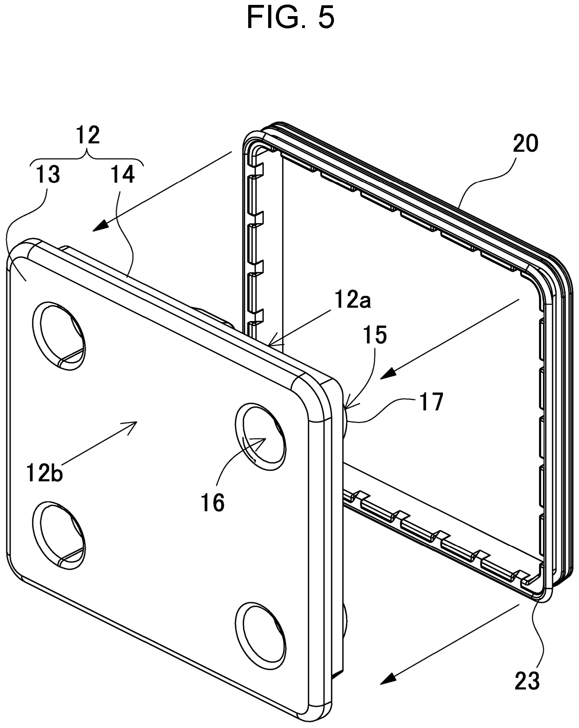

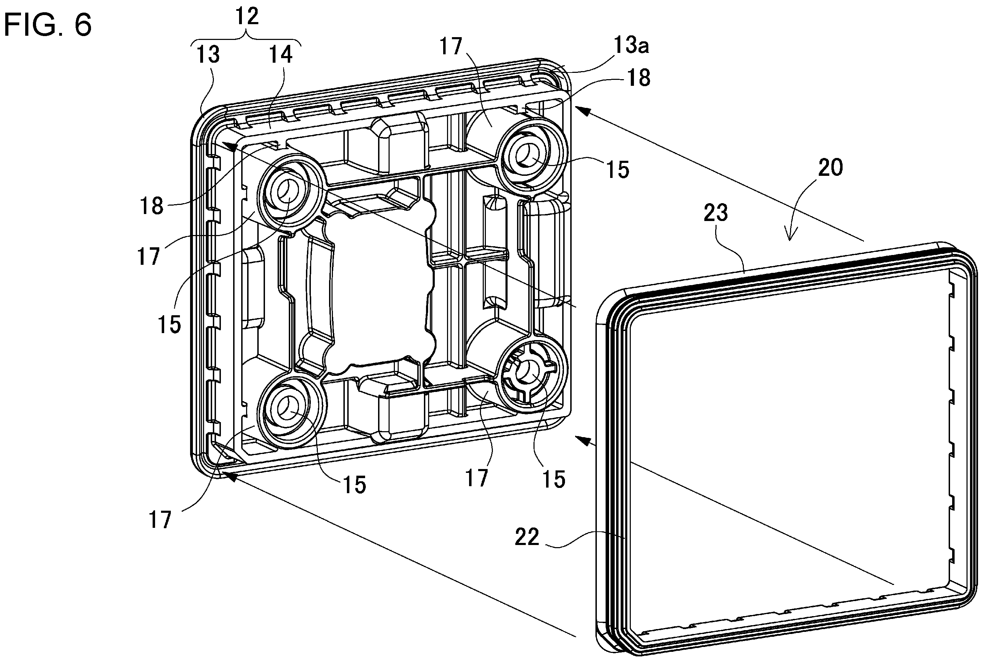

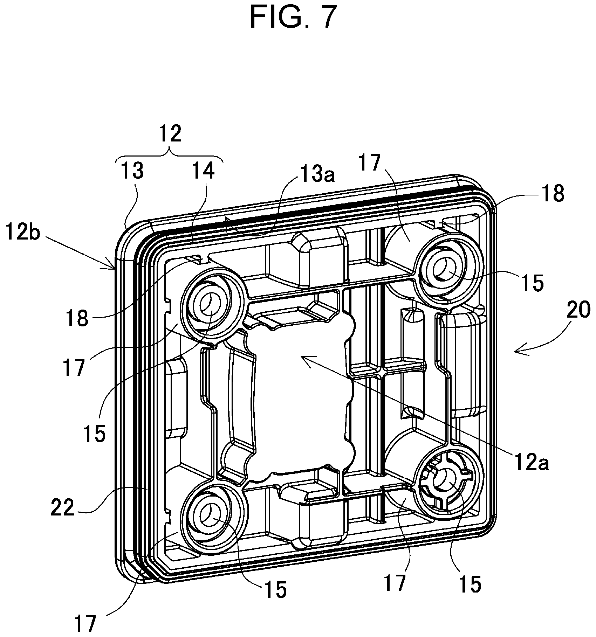

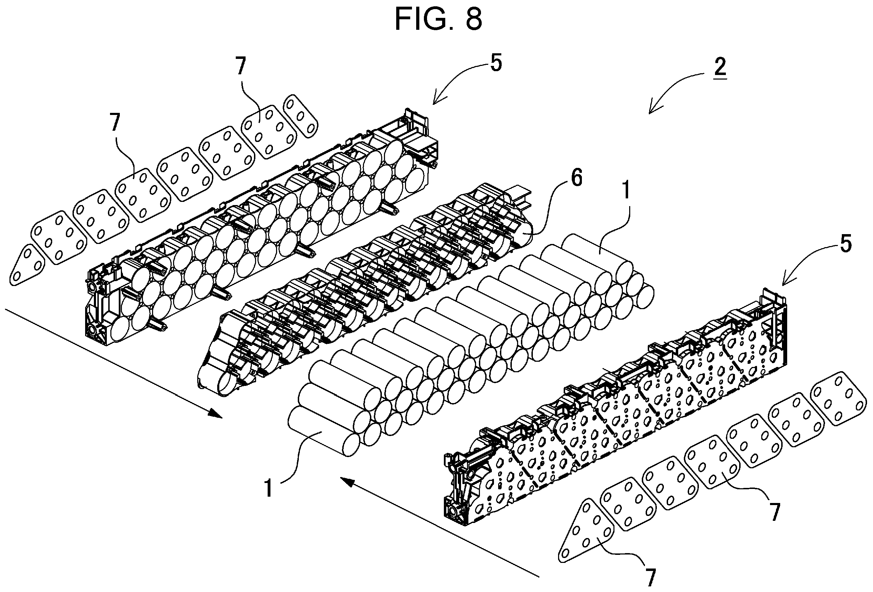

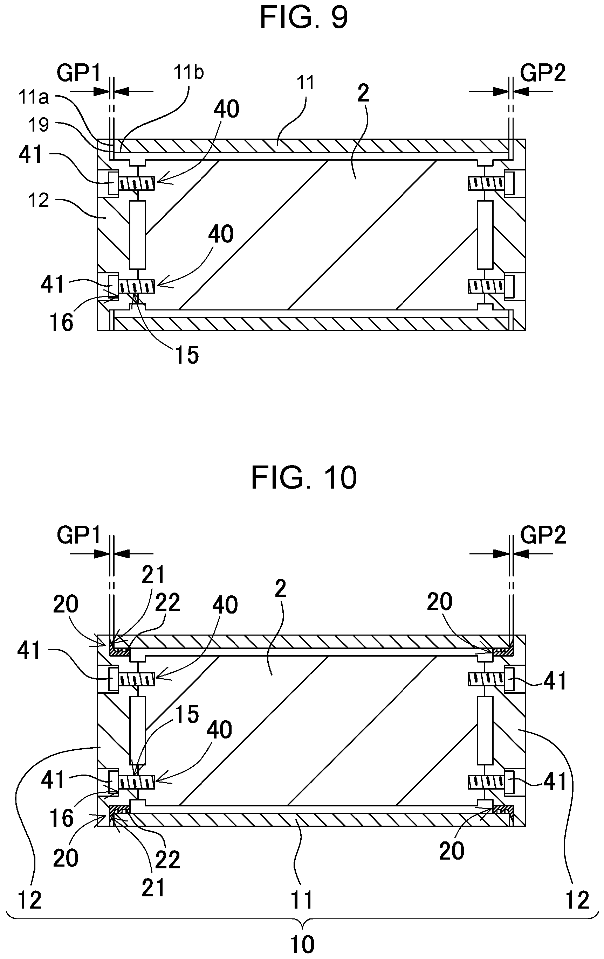

Figs. 1 to 10 illustrate battery pack 100 according to Embodiment 1 of the present disclosure. In these figures, Fig. 1 is a perspective view of battery pack 100 according to Embodiment 1, Fig. 2 is an exploded perspective view of battery pack 100 of Fig. 1, Fig. 3 is a cross-sectional view taken along line III-III of Fig. 1, Fig. 4 is an enlarged cross-sectional view of a main part that illustrates the dashed line portion of Fig. 3, Fig. 5 is an enlarged exploded perspective view of lid part 12 and elastic body 20 of Fig. 2, Fig. 6 is an exploded perspective view of lid part 12 and elastic body 20 of Fig. 5 as viewed from the rear, Fig. 7 is a perspective view of lid part 12 of Fig. 6 with elastic body 20 coupled thereto, Fig. 8 is an exploded perspective view of battery block 2, Fig. 9 is a schematic cross-sectional view of battery pack 100 with elastic body 20 removed, and Fig. 10 is a schematic cross-sectional view of the battery pack of Fig. 9 with elastic body 20 added thereto. Battery pack 100 illustrated in these figures includes battery block 2, outer casing 10, and elastic body 20. Battery block 2 is composed of a plurality of secondary battery cells 1.

### (Outer Casing 10)

Outer casing 10 has an elongated profile extending in one direction, as illustrated in Figs. 1 to 3 and the like. While outer casing 10 is formed in the shape of a prism having chamfered corners, outer casing 10 may employ various cross-sectional areas and shapes such as a polygon and a circular column.

### (Case Body 11)

Outer casing 10 includes casing body 11 and a pair of lid parts 12 in the example illustrated in Figs. 2 and 3. Casing body 11 is formed in the shape of a tube having opposite open ends, and the interior of casing body 11 serves as a housing space. Each of the opposite open ends defines a square opening. Note that casing body 11 may alternatively be formed in the shape of a circular cylinder as mentioned above; in this case, the open ends are circular.

Casing body 11 is formed of a material exhibiting high strength and good heat dissipation, for example, a metal member made of aluminum, an aluminum alloy, or the like. Furthermore, the outer casing may be formed of a highly insulative member, for example, a resin such as polycarbonate (PC) or a polycarbonate-acrylonitrile butadiene styrene (PC-ABS) alloy.

### (Lid Part 12)

The pair of lid parts 12 are sized and shaped to cover the respective open ends of casing body 11. In the example illustrated in Figs. 2, 3, and 4, each lid part 12 is formed such that inner surface 12a of lid part 12, that is, the side thereof facing the open end of casing body 11, has a footprint substantially equal to the size of the end surface of casing body 11. A connector or the like for enabling external electrical connection, as needed, is disposed on outer surface 12b of lid part 12 which is exposed to the outside.

Wall part 14 is formed on inner surface 12a of each lid part 12. Specifically, lid part 12 includes: lid body 13; and wall part 14 extending from inner surface 12a of lid body 13. Lid body 13 is formed as a flat board, as illustrated in Fig. 5. Wall part 14 is disposed on inner surface 12a of lid body 13. In the example illustrated in Fig. 6, wall part 14 is disposed extending from lid body 13 and projecting toward the open end of casing body 11. This wall part 14 is preferably integrated with lid body 13. In the example illustrated in Fig. 7, wall part 14 is formed as a frame slightly smaller than the outer diameter of square lid body 13. Elastic body 20 is disposed around wall part 14. As illustrated in Figs. 5 and 6, lid part 12 is secured to casing body 11 with elastic body 20 covering the periphery of wall part 14.

Lid parts 12 are secured to the respective end surfaces of battery block 2 housed within the housing space of casing body 11. Threaded engagement, rivets, welding, or the like is used to secure lid parts 12 and battery block 2. In the example illustrated in Figs. 2, 6, and 7, threaded engagement using screws 40 is employed. Therefore, lid body 13 has, at the four corners thereof, screw holes 15 for threadably engaging screws 40, as illustrated in Fig. 2 and the like. Preferably, step portion 16 is formed on outer surface 12b of lid body 13 around each screw hole 15 so that head 41 of threaded screw 40 is seated within step portion 16, which prevents head 41 of screw 40 from protruding beyond outer surface 12b of lid body 13, as illustrated in the schematic cross-sectional view of Fig. 9. Furthermore, on inner surface 12a of lid body 13, boss 17 having a cylindrical shape is formed along the periphery of each screw hole 15, as illustrated in Figs. 6 and 7. Preferably, rib 18 couples boss 17 and wall part 14 to improve the strength of lid part 12.

### (Gap GP)

As illustrated in Fig. 9, gap GP is formed between lid part 12 and the edge of casing body 11 when lid parts 12 are secured to the respective end surfaces of battery block 2. In the figure, left gap GP1 and right gap GP2 are depicted as substantially equal for explanatory purposes; however, in practice, these gaps are not necessarily equal, and one of these gaps is decreased while the other is increased. These gaps are absorbed by elastic body 20, as illustrated in Fig. 10 (which will be described in detail later).

### (Battery Block 2)

Battery block 2, which is also referred to as a battery module, a core pack, or the like, houses a plurality of secondary battery cells 1. The battery block may include a plurality of sub-blocks, and each sub-block may house a plurality of secondary battery cells. In the example illustrated in Figs. 2 and 8, multiple cylindrical secondary battery cells 1 are placed horizontally when housed and held in battery holder 5. Battery holder 5 may be composed of two or more separate parts.

### (Lead Plate 7)

Battery block 2 includes battery holder 5, secondary battery cell 1, and lead plate 7. Lead plate 7 is disposed on a side surface of battery holder 5. Lead plate 7 connects the plurality of secondary battery cells 1 by connecting electrodes on the end surfaces of secondary battery cells 1. Lead plate 7 is formed of a metal plate having high electrical conductivity such as an aluminum plate, a nickel plate, or a copper plate. The plurality of secondary battery cells 1 are connected in series or in parallel via lead plate 7. The number of secondary battery cells connected in series or in parallel can be set arbitrarily according to required specifications. In the example illustrated in Fig. 2 and the like, a total of 42 secondary battery cells 1 in a 14-series, 3-parallel configuration are used for entire battery block 2; however, this configuration is not limiting.

Battery block 2 is connected to a circuit board via lead plate 7, a busbar, and the like. The circuit board has mounted thereon, for example, a charge/discharge circuit that charges and discharges secondary battery cell 1 and a protection circuit that monitors the voltage, temperature, and the like of secondary battery cell 1 to interrupt the electric current in an abnormal condition. The circuit board is formed of a glass epoxy board or the like. Furthermore, in battery block 2, a board holder 4 may be disposed as a member configured to hold the circuit board.

A plurality of housing cylinders 6 configured to house respective secondary battery cells 1 are disposed on battery holder 5. For example, as illustrated in Fig. 8, battery holder 5 is laterally divided into two parts, and secondary battery cells 1 are housed by being laterally sandwiched by halved housing cylinders 6. Such battery holder 5 can be made of a highly insulative resin such as polycarbonate.

### (Secondary Battery Cell 1)

Using battery holder 5, the plurality of secondary battery cells 1 are arranged with such a posture that the end surfaces of respective secondary battery cells 1 lie in the same plane. Secondary battery cells each having a cylindrical or square-shaped profile can be used as secondary battery cells 1. In the example illustrated in Fig. 8 and the like, cylindrical secondary battery cells 1 are placed horizontally and arranged in a staggered pattern. Note that the number and positions of secondary battery cells are not limited to those employed in this example and may be varied as needed. For example, cylindrical secondary battery cells may be arranged in a matrix.

Each of secondary battery cells 1 includes positive and negative electrodes. Preferably, one of the positive electrode and the negative electrode is disposed on one end surface of secondary battery cell 1, and the other electrode is disposed on the opposite end surface. In the example illustrated in Fig. 2 and the like, the bottom of the outer covering can of secondary battery cell 1 is the negative electrode. For such secondary battery cells 1, known secondary batteries such as lithium-ion secondary batteries, nickel-hydrogen batteries, or nickel-cadmium batteries can be used, as appropriate.

### (Elastic Body 20)

As illustrated in Fig. 9, gaps GP1, GP2 are formed between lid part 12 (lid body 13) and edge 11a of casing body 11 when lid parts 12 are secured to the end surfaces of battery block 2. In order to fill gaps GP1, GP2, elastic bodies 20 are disposed on inner surfaces 12a of lid parts 12, as illustrated in Fig. 10. Each elastic body 20 is disposed to abut a surface of wall part 14 that faces inner surface 11b of casing body 11 (refer to Fig. 9). Specifically, elastic body 20 is formed as a loop to cover the periphery of wall part 14. While elastic body 20 is formed into a square shape in the example illustrated in Figs. 5 and 6 and the like, elastic body 20 may be formed in a polygonal or ring shape or the like according to the shape of wall part 14.

### (Inclined Surface 21)

Each elastic body 20 forms inclined surface 21 flaring out toward inner surface 12a of lid part 12. Inclined surface 21 partially enters gap GP, as illustrated in Fig. 4. As a result, corner portion 19 of the edge and the inner side at the open end of casing body 11 is in abutment with a portion of inclined surface 21. With this configuration, the situation in which the main casing wobbles at opposite ends facing lid parts 12 due to gaps GP formed between casing body 11 and lid parts 12 can be avoided by bringing corner portion 19 of the edge of casing body 11 into abutment with elastic body 20 while battery block 2 and lid parts 12 are secured.

Next, the configuration for stably holding the main casing will be described with reference to Figs. 11 to 14. Assume battery pack 1100 according to Comparative Example 1 in which battery block 1102 is inserted into outer casing 1110 and lid parts 1112 seal outer casing 1110, as illustrated in the exploded perspective view of Fig. 11. Outer casing 1110 includes: tubular casing body 1111 having opposite open end surfaces such that the interior of casing body 1111 serves as a housing space; and a pair of lid parts 1112 that close said end surfaces. Furthermore, battery block 1102 holding the plurality of secondary battery cells 1 is inserted into the housing space of casing body 1111. With battery block 1102 inserted through the end surface of casing body 1111, the end surfaces are closed by lid parts 1112. Using end surface screws 1140, lid parts 1112 are threaded into end surface screw holes 1108 which are open in the end surfaces of the casing body 1111. Furthermore, in the example of Fig. 11, the bottom surface of casing body 1111 has bottom surface screw holes 1109 for securing battery block 1102 located inside the housing space. When inserted into the housing space of casing body 1111, battery block 1102 is secured to casing body 1111 via bottom surface screws 1143 fastened to bottom surface screw holes 1109 of casing body 1111. In battery pack 1100 having this structure, battery block 1102 inside casing body 1111 is directly threaded onto casing body 1111 and thus, battery block 1102 can be stably secured to outer casing 1110.

However, there are cases where such bottom surface screws cannot be used depending on the specifications of battery packs. For example, forming the end surface screw holes in the casing body requires an increased thickness of the casing body. In particular, when the casing body is made of metal in order to increase strength thereof, the increased thickness of the casing body results in greater weight and cost. Furthermore, while the bottom surface or the like of the casing body needs to have the bottom surface screw holes so that the bottom surface or the like of battery block 2 is threaded onto the casing body, this configuration makes it difficult to achieve a watertight seal for the outer casing. For this reason, there are cases where the casing body and the battery block cannot be directly threaded onto each other. Therefore, in a conceivable configuration, the casing body has no end surface screw holes or bottom surface screw holes and the lid parts are directly secured to battery block 2.

As an example, battery pack 1200 according to Comparative Example 2 is illustrated in the exploded perspective view of Fig. 12. In this battery pack 1200, each of the end surfaces of battery block 1202 inserted into casing body 1211 has block screw holes 1207, and lid part 1212 threadably engages the end surface via end surface screws 1240. In this configuration, each of the end surfaces of casing body 1211 and lid part 12 are not directly secured. Furthermore, gap GP is inevitably formed at the joint interface between casing body 1211 and lid part 1212 due to manufacturing tolerances of casing body 1211, battery block 2, and the like, as illustrated in the cross-sectional view of Fig. 13.

As a result, casing body 1211 undergoes a positional shift by a distance corresponding to gap GP between casing body 1211 and lid part 12, as indicated by the arrow in Fig. 13, which may obstruct alignment and compromise mountability of battery pack 1200 to be installed in place on the target device.

Furthermore, casing body 1211 moves by a distance corresponding to gap GP between casing body 1211 and lid part 1212, as illustrated in Fig. 14. Therefore, when external stress is applied to battery pack 1200 such as cases where battery pack 1200 is used in an environment subject to vibration or battery pack 1200 is dropped from a height, battery pack 1200 may be damaged due to contact at the joint interface between casing body 1211 and lid part 1212. Depending on the application, specifications, and the like, the battery pack is required, for example, to pass drop and vibration tests as reliability and durability tests. In particular, when the casing body is made of metal in order to enhance the rigidity of the outer casing and the lid part is made of resin in order to improve insulation for connectors and the like disposed on the lid part, a stiffness mismatch between the metal casing body and the resin lid part may cause cracks or damage in the lid part.

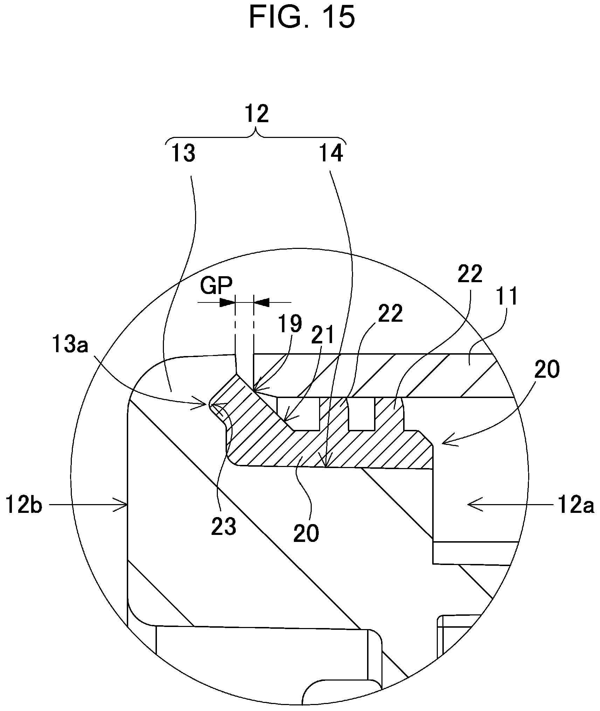

In contrast, in battery pack 100 according to the present embodiment, elastic body 20 is positioned as illustrated in Fig. 10, thereby reducing wobbling caused by gap GP, such as that illustrated in Fig. 9. Specifically, as illustrated in Fig. 15, elastic body 20 is positioned outside of each wall part 14 so that a portion of inclined surface 21, which is formed on elastic body 20 and flares out toward inner surface 12a of lid part 12, enters gap GP between lid body 13 and the edge of the open end of casing body 11. This positioning allows corner portion 19 of the edge and the inner side at the open end of casing body 11 to abut a portion of inclined surface 21. As a result, casing body 11 is supported on at least one of the left and right sides by inclined surface 21 that has entered gap GP between each of left and right lid parts 12 and casing body 11.

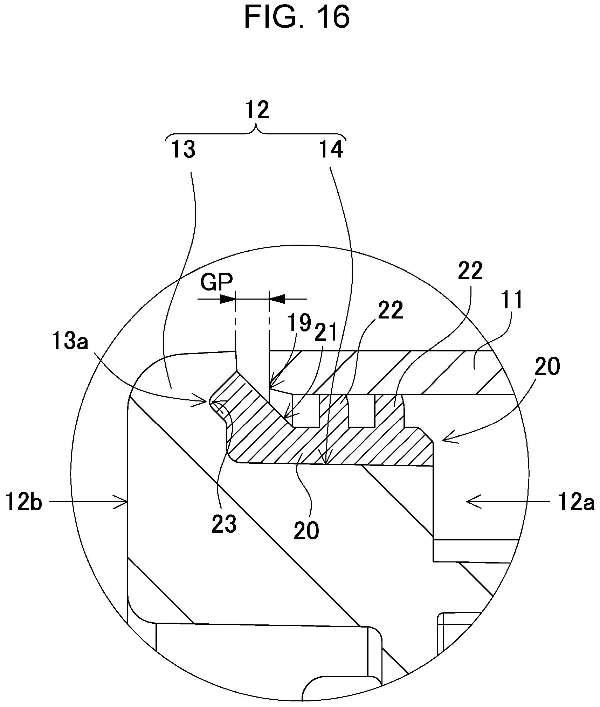

The size of gap GP varies among individual battery packs according to component tolerances. Accordingly, inclined surface 21 is designed with a length that allows even gap GP having a maximum conceivable value to be filled when corner portion 19 abuts inclined surface 21. In other words, inclined surface 21 is designed with dimensions that prevent the situation illustrated in Fig. 16, in which gap GP cannot be sealed because corner portion 19 fails to abut inclined surface 21. Note that the angle of inclined surface 21 is preferably 35° to 55°, and more preferably approximately 45°, relative to wall part 14.

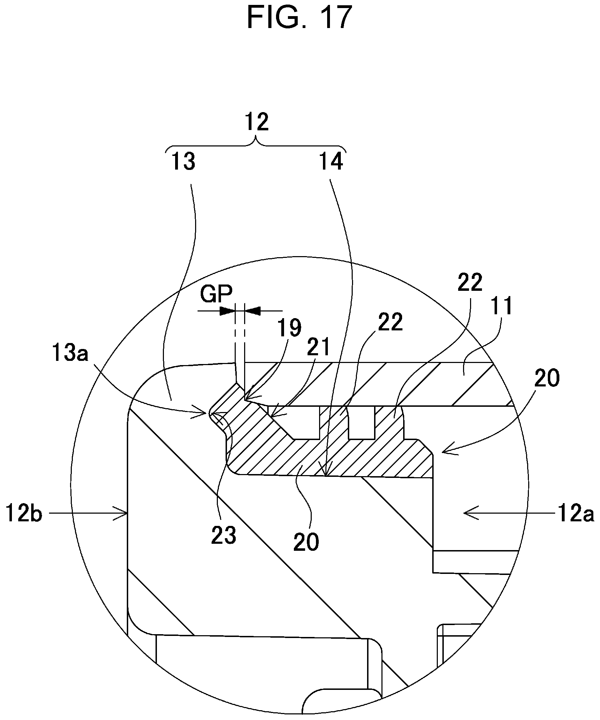

Even when corner portion 19 is brought into abutment, inclined surface 21 of elastic body 20 elastically deforms to support casing body 11 on at least one of the left and right sides, as illustrated in Fig. 17. This results in battery pack 100 with enhanced reliability to handle external forces despite the manufacturing tolerances of casing body 11, lid part 12, and the like. In other words, the situation illustrated in Fig. 14, in which the casing body wobbles laterally between the pair of lid parts, is suppressed, thereby preventing damage to the contact surfaces between the casing body and the lid parts and improving the reliability of the outer casing.

When lid parts 12 are secured to the opposite end surfaces of battery block 2 and elastic bodies 20 are disposed on the pair of lid parts 12, as in battery pack 100 according to the present embodiment, the situation in which casing body 11 wobbles laterally between the pair of lid parts 12 can be suppressed by both left and right elastic bodies 20 on the pair of lid parts 12; thus, this is advantageous in enforcing the effect of reducing the lateral wobbling.

Elastic body 20 extends so that inclined surface 21 flares out in a region where lid part 12 and the edge of the open end of casing body 11 overlap as viewed from the lid part 12. This configuration leads to a structure in which corner portion 19 of casing body 11 inevitably comes into contact with inclined surface 21, making it possible to prevent casing body 11 from wobbling.

Elastic body 20 is formed of an elastic member. For example, a thermoplastic elastomer, synthetic rubber, or the like can be used as the material of elastic body 20.

Elastic body 20 may be integrally formed with wall part 14 by double molding. The double molding enables alternate molding of wall part 14 and elastic body 20, which are made of different materials, within a single cycle to produce a molded product using two kinds of resin, making it possible to easily obtain lid part 12 with elastic body 20 pre-secured to wall part 14.

### (Flange Portion 22)

Furthermore, flange portion 22 projecting to inner surface 12a of casing body 11 is disposed on elastic body 20. Flange portion 22 is designed with a height slightly greater than the distance between the elastic part and the inner surface of casing body 11, as illustrated in Fig. 15 and the like. Accordingly, the leading edge of flange portion 22 elastically deforms upon abutting the casing inner surface and seals the spacing between the periphery of wall part 14 and casing body 11 in a liquid-tight manner, allowing battery pack 100 to have a watertight structure. Furthermore, because wobbling of casing body 11 can be prevented using elastic body 20, which realizes the watertight structure, a wobble-free structure can be realized using existing members without requiring additional members. In other words, by changing the shape of a gasket intended for a watertight structure, the wobble-suppression functions for the casing body can be added to the watertight structure, and sharing the same member enables improved reliability at low cost with a simple configuration.

In the example of Fig. 15, flange portion 22 is formed in two layers to enhance watertightness. Note that flange portion 22 may alternatively be formed in a single layer or in three layers, for example, depending on the required level of waterproof performance.

Furthermore, recessed portion 13a may be formed in inner surface 12a of lid body 13. As illustrated in Figs. 6 and 15, etc., recessed portion 13a is formed as a loop along the peripheral edge of inner surface 12a of lid body 13 between the peripheral edge thereof and a portion thereof on which wall part 14 is disposed.

### (Projecting Portion 23)

Meanwhile, projecting portion 23, which is inserted into recessed portion 13a as illustrated in Fig. 4, is formed on a surface of elastic body 20 that faces inner surface 12a. This configuration allows lid part 12 and elastic body 20 to be positioned and joined by inserting projecting portion 23 into recessed portion 13a. Furthermore, when recessed portion 13a and projecting portion 23 are disposed in a direction in which lid part 12 is secured to or pressed against battery block 2, lid body 13 can push elastic body 20 in the securing direction to achieve stable mounting.

Furthermore, corner portion 19 at the open end of casing body 11 is chamfered. This configuration ensures that corner portion 19, which contacts elastic body 20, forms an obtuse angle, increasing the contact pressure at the abutting portion and thereby allowing casing body 11 to be more stably prevented from wobbling.

In the above-described examples, the battery pack is used as a power supply for an electric assisted bicycle; however, the present disclosure is not limited to these examples, and the battery pack may also be used for other applications, such as being mounted on an electrical device to be driven and supplying electric power to the electrical device. Examples of the electrical device include a movable body such as an electric vehicle or an electric cart and a portable electrical device. When the remaining capacity of the battery pack becomes low or when the battery pack degrades over time, the electrical device can continue to be used by replacing the battery pack. Note that the present disclosure is not limited to a replaceable battery pack in which a secondary battery cell is mainly housed; the present disclosure may also be applied to an embodiment in which a secondary battery cell is housed in the casing of an electrical device. The battery pack according to the present disclosure refers to those in which, as the minimum standard, a secondary battery cell is housed in a casing and thus examples of the battery pack include those in which a secondary battery cell for driving is embedded in the casing of an electrical device itself. In other words, the present disclosure can be applied not only to a replaceable battery pack, but also to an electrical device with a secondary battery cell embedded therein.

### Industrial Applicability

The battery pack according to the present invention can be suitably used as a power supply for driving movable bodies such as an electric assisted bicycle, an electric cart, and an electric scooter, a power supply for radios, a power supply for portable electrical devices such as an electric cleaner and an electric tool, a backup power supply for servers, etc., or a stationary energy storage device for homes, offices, and factories.

### Reference Signs List

- 100: battery pack
- 1: secondary battery cell
- 2: battery block
- 5: battery holder
- 6: housing cylinder
- 7: lead plate
- 10: outer casing
- 11: casing body
- 11a: edge
- 11b: inner surface
- 12: lid part
- 12a: inner surface
- 12b: outer surface
- 13: lid body
- 13a: recessed portion
- 14: wall part
- 15: screw hole
- 16: step portion
- 17: boss
- 18: rib
- 19: corner portion
- 20: elastic body
- 21: inclined surface
- 22: flange portion
- 23: projecting portion
- 40: screw
- 41: head
- 1100, 1200: battery pack
- 1102, 1202: battery block
- 1108: end surface screw hole
- 1109: bottom surface screw hole
- 1110, 1210: outer casing
- 1111, 1211: casing body
- 1112, 1212: lid part
- 1140: end surface screw
- 1143: bottom surface screw
- 1240: end surface screw
- GP: gap
- GP1: left gap
- GP2: right gap

## Claims

1. A battery pack comprising:
a battery block holding a plurality of secondary battery cells;
an outer casing including (i) a casing body including a first end surface and a second end surface that are open, a first open end, a second open end, and a housing space, (ii) a first lid part configured to cover the first open end of the casing body; and (iii) a second lid part configured to cover the second open end of the casing body; and
a first elastic body disposed on an inner surface of the first lid part, wherein
the battery block is housed in the housing space of the casing body,
the first lid part is secured to the first end surface of the battery block,
the second lid part is secured to the second end surface of the battery block,
a first gap is formed between the first lid part and the casing body,
the first lid part includes:
a first lid body that is a flat board; and
a first wall part projecting from an inner surface of the first lid body,
the first elastic body is disposed to abut a surface of the first wall part that faces an inner surface of the casing body,
the first elastic body includes a first inclined surface flaring out toward the inner surface of the first lid part,
a portion of the first inclined surface enters the first gap, and
a first corner portion of the casing body that is located between an edge of the first open end of the casing body and the inner surface of the casing body abuts the first inclined surface.

2. The battery pack according to claim 1, wherein
the first elastic body extends so that the first inclined surface flares out in a region where the first lid part and the edge of the first open end of the casing body overlap as viewed from the lid part.

3. The battery pack according to claim 1, wherein
the first elastic body further includes a flange portion projecting toward the inner surface of the casing body.

4. The battery pack according to claim 1, wherein
the first lid body includes a recessed portion between the first wall part and a peripheral edge of the first lid body, and
the first elastic body includes a projecting portion inserted into the recessed portion of the first lid body.

5. The battery pack according to any one of claims 1 to 4, wherein
the first elastic body is integrally formed with the first wall part by double molding.

6. The battery pack according to any one of claims 1 to 4, wherein
the first corner portion at the first open end of the casing body is chamfered.

7. The battery pack according to any one of claims 1 to 4, wherein
the first lid part is threadably secured to the first end surface of the battery block, and
the second lid part is threadably secured to the second end surface of the battery block.

8. The battery pack according to any one of claims 1 to 4, further comprising:
a second elastic body disposed on an inner surface of the second lid part, wherein
a second gap is formed between the second lid part and the casing body,
the second lid part includes:
a second lid body that is a flat board; and
a second wall part projecting from the inner surface of the second lid body,
the second elastic body is disposed to abut a surface of the second wall part that faces the inner surface of the casing body,
the second elastic body includes a second inclined surface flaring out toward the inner surface of the second lid part,
a portion of the second inclined surface enters the second gap, and
a second corner portion of the casing body that is located between an edge of the second open end of the casing body and the inner surface of the casing body abuts the second inclined surface.
